# EUROPÄISCHE PATENTSCHRIFT

(11) **EP 1 627 445 B1**
(45) Veröffentlichungstag und Bekanntmachung des Hinweises auf die Patenterteilung: **16.06.2010**
(21) Anmeldenummer: 04727500.3
(22) Anmeldetag: 15.04.2004
(51) Int. Cl.: H01M 8/24

(54) **ELEKTROLYSE- BZW. BRENNSTOFFZELLE MIT DRUCKKISSEN UND VERBESSERTEM ÜBERGANGSWIDERSTAND**
ELECTROLYTIC CELL OR FUEL CELL COMPRISING PRESSURE PADS AND AN IMPROVED TRANSFER RESISTANCE
CELLULE ELECTROLYTIQUE OU ELECTROCHIMIQUE POURVUE DE COUSSINS DE PRESSION ET PRESENTANT UNE RESISTANCE DE PASSAGE AMELIOREE

(30) Priorität: 26.05.2003 DE 10323883
(43) Veröffentlichungstag der Anmeldung: 22.02.2006
(73) Patentinhaber: SIEMENS AKTIENGESELLSCHAFT, 80333 München (DE)
(72) Erfinder: HARTNACK, Herbert, 91056 Erlangen (DE); LERSCH, Josef, 91336 Heroldsbach (DE); MATTEJAT, Arno, 91056 Erlangen (DE)
(86) Internationale Anmeldenummer: PCT/DE2004/000785
(87) Internationale Veröffentlichungsnummer: WO 2004/109838

(56) Entgegenhaltungen:
- EP-A- 0 308 761
- DE-A- 10 003 528
- US-A- 4 317 864
- US-A- 5 736 269
- US-A- 5 824 199
- US-B1- 6 468 682
- PATENT ABSTRACTS OF JAPAN Bd. 0110, Nr. 83 (E-489), 13. März 1987 (1987-03-13) & JP 61 239568 A (ISHIKAWAJIMA HARIMA HEAVY IND CO LTD), 24. Oktober 1986 (1986-10-24)
- PATENT ABSTRACTS OF JAPAN Bd. 0173, Nr. 75 (E-1397), 14. Juli 1993 (1993-07-14) & JP 5 062702 A (HITACHI LTD), 12. März 1993 (1993-03-12)

## Beschreibung

Die Erfindung betrifft eine elektrochemische Batterie, insbesondere eine Brennstoffzellen-Batterie oder eine Elektrolysezellen-Batterie, mit mehreren Elektrolyt-Elektrodeneinheiten, einer Anzahl von Kühlkarten zur Kühlung jeweils zumindest einer der Elektrolyt-Elektrodeneinheiten und zumindest einem unabhängig von der Medienversorgung der Elektrolyt-Elektrodeneinheiten druckbeaufschlagbaren Druckraum zur Erzeugung eines Anpressdruckes zwischen Bauteilen der elektrochemischen Batterie, die dem Druckraum benachbart sind. Eine derartige elektrochemische Batterie ist beispielsweise aus der EP 0 591 800 B1 bekannt.

Die EP 0 591 800 B1 offenbart eine Brennstoffzellen-Batterie, die zwischen jeweils zwei parallel zueinander angeordneten Elektrolyt-Elektroden-Einheiten, die aus jeweils einer Anode, einer Polymer-Elektrolyt-Membran (PEM) und einer Kathode bestehen, zwei parallel zueinander angeordnete und miteinander verbundene Platten aufweist, die zwischen sich einen Hohlraum bilden. Zwischen den Platten und den Elektroden der jeweils zwei benachbarten Elektrolyt-Elektroden-Einheiten sind Gas- oder Fluidräume zur Zufuhr von Betriebsmedien wie Wasserstoff oder Sauerstoff zu den Elektrolyt-Elektroden-Einheiten ausgebildet.

Der Hohlraum zwischen den beiden parallel zueinander angeordneten Platten kann zum einen zur Zu- und Abfuhr eines Kühlmediums benutzt werden. In diesem Fall bilden die beiden Platten eine Kühlkarte zur Kühlung der beiden Elektrolyt-Elektroden-Einheiten. Der Hohlraum kann statt zur Zu- und Abfuhr eines Kühlmediums auch als druckbeaufschlagbarer Druckraum zum Aufbau eines Druckkissens verwendet werden, das einen Druck auf die benachbarten Bauteile ausübt und somit einen Anpressdruck zwischen diesen benachbarten Bauteilen z.B. zur Gewährleistung eines guten Stromflusses zwischen diesen beiden Bauteilen erzeugt. Zum anderen kann ein solches Druckkissen als Ausgleichselement bei Toleranzen in den Abmessungen der benachbarten Bauteile verwendet werden. Bei Verwendung der Kühlkarte als Druckkissen ist allerdings die Kühlung des Brennstoffzellenblocks reduziert.

Eine aus der DE 27 29 640 C3 bekannte Batterie aus einer Mehrzahl elektrochemischer Zellen, insbesondere Brennstoffelementen, weist parallel zueinander angeordnete Elektrolyt-Elektrodeneinheiten auf, zwischen denen jeweils metallische Kontaktkörper zur Stromabnahme angeordnet sind. Diese Kontaktkörper weisen einen Hohlraum zum Zuführen eines unter Druck stehenden Mediums auf und sind damit als Druckkissen zum Zusammenpressen der gesamten Anordnung ausgebildet. Hierdurch kann ein gleichmäßiger Anpressdruck zwischen benachbarten Bauteilen erzeugt und somit z.B. der Stromfluss zwischen diesen Bauteilen verbessert werden. Eine Kühlung der Elektrolyt-Elektrodeneinheiten ist hierbei nicht vorgesehen.

Kühlkarten sind generell darüber hinaus z.B. aus der WO 02/50953A2 bekannt. Eine hierin offenbarte Kühlkarte ist als Verbundleiterplatte mit zwei Blechen ausgebildet, die zwischen sich einen Hohlraum bilden. Dieser Hohlraum weist Zu- und Ableitungskanäle auf und wird während des Betriebs der Brennstoffzellen von Kühlwasser oder auch von Heizwasser durchströmt.

Die US 5,824,199 beschreibt eine elektrochemische Zelle zur Erzeugung von trockenem Halogengas mit einer Vorrichtung bestehend aus zwei Platten und einem dazwischen angeordneten Druckraum zur Erzeugung eines Anpressdruckes zwischen benachbarten Bauteilen. Als Druckmedium wird hierbei ein Kühlmittel verwendet, so dass die Vorrichtung gleichzeitig die Funktion einer Kühlkarte erfüllt.

Der Erfindung liegt die Aufgabe zugrunde, eine elektrochemische Batterie der eingangs erwähnten Art derart weiterzubilden, dass sie sich bei einfachem und kompaktem Aufbau sowohl durch eine gute Kühlung der Elektrolyt-Elektrodeneinheiten als auch durch einen guten Anpressdruck zwischen benachbarten Bauteilen auszeichnet.

Diese Aufgabe wird erfindungsgemäß gelöst durch eine elektrochemische Batterie mit den Merkmalen des Anspruchs 1. Vorteilhafte Ausgestaltungen der Erfindung sind Gegenstand der Unteransprüche.

Unter einer elektrochemischen Batterie wird hierbei eine Brennstoffzellen-Batterie ebenso verstanden wie eine Batterie aus Elektrolysezellen.

Erfindungsgemäß ist der zumindest eine Druckraum zumindest einer der Kühlkarten benachbart und zumindest teilweise von dieser Kühlkarte begrenzt. Unter einer Kühlkarte wird hierbei jede Art einer verschweißten oder sonstwie gebildeten Platte verstanden, die einen Hohlraum für ein Kühlmedium bildet. Beispielsweise handelt es sich um Doppelplatten, die aufeinander liegen und entlang der Kanten miteinander abdichtend aneinandergefügt sind. Die Kühlkarten können Öffnungen zur Aufnahme und Abgabe von Kühlmedien enthalten. Zur Verringerung des Übergangswiderstandes zu anliegenden Bauteilen kann eine Kühlkarte an ihrer Oberfläche zusätzlich mit einer Kontaktplatte und/oder Kontaktfolie versehen sein.

Die Erfindung wendet sich somit ab von dem bisher beschrittenen Weg, ein Druckkissen durch Druckbeaufschlagung des Hohlraumes einer Kühlkarte zu bilden. Vielmehr wird eine Kühlkarte zur Bildung eines außerhalb der Kühlkarte befindlichen Druckraumes genutzt. Die Kühlkarte kann somit weiterhin mit dem Kühlmedium versorgt werden und eine Kühlung von Elektrolyt-Elektrodeneinheiten ermöglichen, während durch den Druckraum ein Anpressdruck zwischen benachbarten Teilen erzeugt werden kann. Durch die Verwendung der Kühlkarten zum Aufbau des Druckraumes zeichnet sich die Batterie durch eine geringe Teilevielfalt und somit einen einfachen und kompakten Aufbau aus.

Wenn die Kühlkarte unmittelbar an einer Elektrolyt-Elektrodeneinheit anliegt und diese elektrisch kontaktiert, dient sie neben der Kühlung auch zur Stromabnahme von dieser Elektrolyt-Elektrodeneinheit. Neben einer flächigen Auflage des die Elektrolyt-Elektrodeneinheit kontaktierenden Stromabnahmeelementes, hier der Kühlkarte, ist des Weiteren der Übergangswiderstand zwischen der Elektrolyt-Elektrodeneinheit und dem Stromabnahmeelement von Bedeutung. In der Regel sinkt der Übergangswiderstand mit steigendem Anpressdruck. Sofern kein gleichmäßiger Anpressdruck an der Oberfläche der Elektrolyt-Elektrodeneinheit gegeben ist, entstehen Querströme von Bereichen mit hohem Übergangswiderstand zu Bereichen mit niedrigem Übergangswiderstand. Derartige im Allgemeinen durch schlecht leitende Materialien wie Kohlepapier, Katalysatorschichten, Kohle-Kunststoff-Composits oder schlecht leitendes Blech fließende Querströme verursachen einen Spannungsabfall und damit Wirkungsgradverlust. Mit Hilfe des Druckraumes kann nun die gesamte Kühlkarte mit einem gleichmäßigen Druck beaufschlagt werden, ein gleichmäßiger Anpressdruck zwischen der Kühlkarte und der Elektrolyt-Elektrodeneinheit erzeugt und Querströme an der Oberfläche der Elektrolyt-Elektrodeneinheit vermieden werden.

Gemäß einer vorteilhaften Augestaltung der Erfindung ist der Druckraum zwischen zwei der Kühlkarten angeordnet und zumindest teilweise von diesen zwei Kühlkarten begrenzt. Bei einer Stapelanordnung von abwechselnd Elektrolyt-Elektrodeneinheiten und Kühlplatten in der elektrochemischen Batterie kann der Druckraum somit auf einfache Weise dadurch gewonnen werden, dass in der Stapelanordnung eine zwischen zwei Kühlkarten angeordnete Elektrolyt-Elektrodeneinheit entfernt wird und der dadurch entstehende Leerraum als Druckraum genutzt wird.

Gemäß einer weiteren vorteilhaften Ausgestaltung der Erfindung ist der Druckraum zwischen einer der Kühlkarten und einer Polplatte angeordnet und zumindest teilweise von der Kühlkarte und der Polplatte begrenzt. Unter einer Polplatte wird hierbei eine Abschlussplatte eines Zellenstapels verstanden, die der Stromabnahme dient. Auch hier werden somit bereits in der Batterie vorhandene Bauteile zur Bildung des Um einen Stromfluss durch den Druckraum zu ermöglichen, ist innerhalb des Druckraums ein an die zumindest eine Kühlkarte anschließendes Stromübertragungsteil angeordnet. Wenn sich das zur Erzeugung eines Innendrucks im Druckraum vorgesehene Medium von den Medien unterscheidet, mit welchen die Elektrolyt-Elektrodeneinheit betrieben wird, können korrosive Einwirkungen auf innerhalb des Druckraums angeordnete elektrisch leitfähige Elemente zur Verbindung zweier Kühlkarten oder zur Verbindung einer Kühlkarte mit einer Polplatte prinzipbedingt ausgeschlossen werden.

Da sich die Abstände der Begrenzungen des Druckraumes bei Druckbeaufschlagung verändern können, sollte das Stromübertragungsteil einen Abstandsausgleich ermöglichen. Dies ist dadurch möglich, dass das Stromübertragungsteil als ein Federelement ausgebildet ist.

Innerhalb eines zu einer Batterie gestapelten Zellenblocks fließt ein Strom im Normalfall insgesamt normal zu den einzelnen im Allgemeinen plattenförmigen Zellen. Der von Zelle zu Zelle weitergeleitete Strom sollte hierbei auf möglichst kurzem Weg fließen, um die Verlustleistung gering zu halten. Vorteilhafter Weise weist das Federelement deshalb zumindest ein Blech mit einer Anzahl aus der Blecheben herausgebogener Federzungen auf. Über die Federzungen kann der Strom auf relativ kurzem Wege von einer zwischen den beiden den Druckraum zumindest teilweise begrenzenden Kühlplatten oder der den Druckraum begrenzenden Kühlplatte und Polplatte fließen.

Die Federzungen schließen bevorzugt jeweils mit einer anliegenden Kühlkarte einen spitzen Winkel ein und ermöglichen somit sowohl einen Abstandsausgleich innerhalb eines im Vergleich zu den Stärken der flächigen Bestandteile der Elektrolyt-Elektrodeneinheiten weiten Bereiches in der Batterie als auch eine über eine Mehrzahl einzelner Strompfade aufgeteilte elektrische Verbindung zwischen benachbarten Elektrolytauch eine über eine Mehrzahl einzelner Strompfade aufgeteilte elektrische Verbindung zwischen benachbarten Elektrolyt-Elektrodeneinheiten bzw. zwischen einer Elektrolyt-Elektrodeneinheit und einer Polplatte.

Bevorzugt weist die zumindest eine Kühlkarte an ihrer dem Druckraum zugewandten Seite zur Verringerung des Übergangswiderstandes zu dem Stromübertragungsteil eine Kontaktplatte auf.

Nach einer bevorzugten Weiterbildung weist die Kontaktplatte eine auf einer Grundschicht aufgebrachte Leitschicht auf, deren spezifische elektrische Leitfähigkeit die spezifische elektrische Leitfähigkeit der Grundschicht übersteigt. Der an der Oberfläche der Kühlkarte abgenommene und einer weiteren Kühlkarte oder einer Polplatte weitergeleitete Strom wird typischerweise nicht flächig, sondern nur an einzelnen Punkten oder Bereichen der Kühlkarte abgenommen. Durch die Leitschicht auf der Kühlkarte werden Querströme durch schlecht leitende Materialien minimiert und in gut leitendem Material, nämlich der Leitschicht, konzentriert, so dass höchstens eine geringe Verlustleistung auftritt.

Die Leitschicht ist bevorzugt in Form einer galvanischen Beschichtung oder einer Folie auf die Grundschicht aufgebracht. In jedem Fall ist ein guter elektrischer Kontakt zwischen der Leitschicht und der zumindest geringfügig flexiblen Grundschicht gegeben.

Die Dicke der Leitschicht ist, insbesondere im Fall einer Ausbildung als galvanisch erzeugte Beschichtung, bevorzugt geringer als die Dicke der Grundschicht, wobei aufgrund der höheren spezifischen Leitfähigkeit der Leitschicht deren absolute elektrische Leitfähigkeit größer als die absolute elektrische Leitfähigkeit der Grundschicht sein kann. In jedem Fall ist die Kontaktplatte, insbesondere in Form einer Kombination aus Grundschicht und Leitschicht, deutlich leitfähiger als die anschließende Kühlkarte.

Innerhalb eines Zellenstapels einer Batterie ist es ausreichend, lediglich zwischen einem Teil der einzelnen Zellen oder Elektrolyt-Elektrodeneinheiten einen Druckraum bzw. ein Druckkissen bestehend aus zwei Kühlkarten und einem dazwischen angeordneten Druckraum anzuordnen. Typischerweise beträgt die Anzahl der Elektrolyt-Elektrodeneinheiten innerhalb der Batterie mindestens das Doppelte der Anzahl der Druckkissen, beispielsweise das Zehnfache. Die Abmessungen der Batterie sind daher durch die Druckkissen zumindest nicht wesentlich erhöht.

Der Vorteil der Erfindung liegt insbesondere darin, dass ein Druckkissen innerhalb eines Zellenstapels einer elektrochemischen Batterie geschaffen wird, das sowohl als geometrisches Ausgleichselement, als auch als Kühlelement dient. Durch in dem korrosionsgeschützten Druckraum angeordnete Federelemente ist eine verlustarme Stromleitung zwischen benachbarten Elektrolyt-Elektrodeneinheiten bzw. zwischen einer Elektrolyt-Elektrodeneinheit und einer Polplatte möglich.

Ein Ausführungsbeispiel der Erfindung wird nachfolgend anhand einer Zeichnung näher erläutert. Hierin zeigen:
- FIG 1: einen Brennstoffzellenblock als elektrochemische Batterie,
- FIG 2: ein Druckkissen eines Brennstoffzellenblocks mit einer Kühlkarte mit einer unbeschichteten Kontaktplatte,
- FIG 3: ein Druckkissen mit einer Kühlkarte mit einer beschichteten Kontaktplatte,
- FIG 4a-c: ausschnittsweise jeweils ein Ausführungsbeispiel einer Kühlkarte und einer Kontaktplatte, und
- FIG 5a-b: besonders vorteilhafte Ausführungsformen eines Federelementes.

Einander entsprechende Teile sind in allen Figuren mit den gleichen Bezugszeichen versehen.

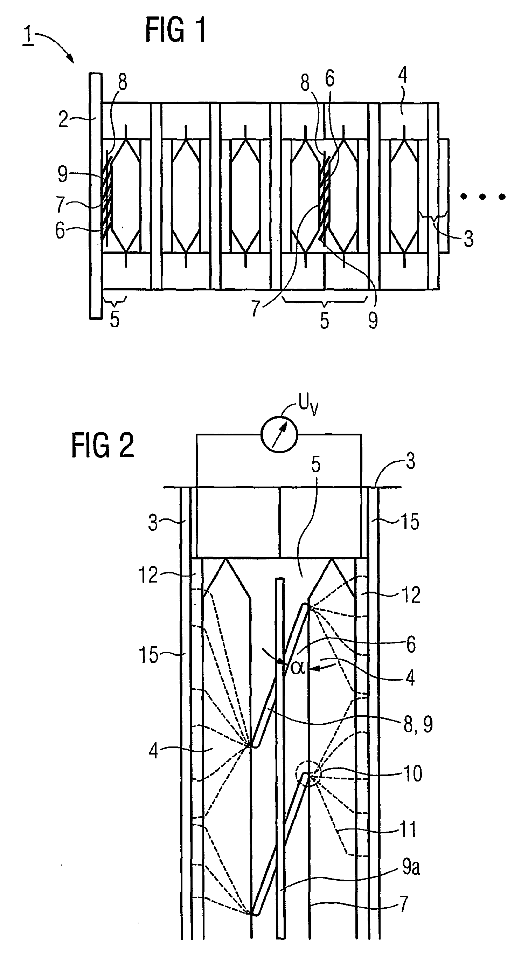

Die FIG 1 zeigt ausschnittsweise in vereinfachter Querschnittsdarstellung eine elektrochemische Batterie 1 in Form einer Brennstoffzellenbatterie bzw. eines Brennstoffzellenblocks, kurz auch als Brennstoffzelle oder Brennstoffzellenstapel bezeichnet. Die Batterie 1 umfasst eine erste Polplatte 2, eine von dieser parallel beabstandete, nicht dargestellte zweite Polplatte, sowie eine Anzahl zwischen diesen angeordneter Elektrolyt-Elektrodeneinheiten 3. Zwischen zwei der Elektrolyt-Elektrodeneinheiten 3, welche auch als Membran-Elektrodeneinheiten (ME) bezeichnet werden und Kohlepapiere, Katalysatorschichten und Membranen der Brennstoffzelle 1 umfassen, sowie zwischen einer außen liegenden Elektrolyt-Elektrodeneinheiten 3 und der benachbarten Polplatte 2 ist jeweils eine Kühlkarte 4 angeordnet. Die auch als Bipolarplatten verwendeten Kühlkarten 4 sind aus dünnen, von ihrer Materialstärke und geometrischen Struktur her leicht verformbaren Blechen gebildet und passen sich Höhenunterschieden der benachbarten Bauteile, d.h. der Membran-Elektrodeneinheiten 3 einschließlich nicht näher dargestellter Gasräume bzw. der Polplatten 2, leicht an.

Im in FIG 1 dargestellten Ausschnitt aus der Batterie 1 ist eine der Elektrolyt-Elektrodeneinheiten 3 aus dem Stapel entfernt, so dass an dieser Stelle ein Hohlraum gebildet ist. Durch Druckbeaufschlagung dieses Hohlraums mit einem beliebigen Medium ist ein Druckkissen 5 gebildet, welches neben einem Druckraum 6 zwei an diesen grenzende Kühlkarten 4 umfasst. Der Druck in dem Druckraum 6 ist größer als die Drücke in den benachbarten Gas- und Kühlwasserräumen, so dass der Druckraum 6 auseinander- und die angrenzenden Räume zusammengedrückt werden. Ein Druckkissen 5 mit lediglich einer Kühlkarte 4, ansonsten jedoch analogem Aufbau, grenzt direkt an die Polplatte 2. Die Grenzfläche zwischen dem Druckraum 6 und der Kühlkarte 4 ist gebildet durch eine Kontaktplatte 7, welche eine zumindest geringfügige Flexibilität aufweist. Der Druck des Mediums im Druckraum 6 des Druckkissens 5 erzeugt eine Flächenpressung an den benachbarten Bauteilen, insbesondere an den auch als Zellen bezeichneten Elektrolyt-Elektrodeneinheiten 3, die über der Fläche der Bauteile keine Unterschiede aufweist, auch wenn die Bauteile, beispielsweise aufgrund von Fertigungstoleranzen, örtlich unterschiedliche Dikken haben. Damit ist eine über der Fläche homogene Verteilung der Übergangswiderstände, insbesondere zwischen den Elektrolyt-Elektrodeneinheiten 3 und den Kühlkarten 4, gegeben. Weiterhin ist durch die von mechanischen Fertigungsergebnissen unabhängige Wahl der Höhe des Pressdrucks im Druckraum 6 eine Möglichkeit gegeben, die Übergangswiderstände insgesamt niedrig einzustellen. Das Medium in den einzelnen Druckräumen 6 ist dabei von den zum Betrieb der Elektrolyt-Elektrodeneinheiten 3 verwendeten Medien unterschiedlich.

Die im Druckkissen 5 gegenüberliegenden Kontaktplatten 7 der Kühlkarten 4 weisen somit einen variablen Abstand auf, welcher abhängig ist von den Toleranzen der Bauteile, die zwischen zwei Druckkissen 5 angeordnet sind, den Federeigenschaften dieser Bauteile, sofern sie durch Druck verformbar sind, und der Höhe des Drucks, den das Medium im Druckkissen 5 ausübt. Die Kühlkarten 4 nehmen elektrischen Strom von den Elektrolyt-Elektrodeneinheiten 3 flächig ab.

Zur Übertragung des Stroms durch den geometrisch variablen Druckraum 6 ist ein in FIG 2 anhand eines ersten Ausführungsbeispiels eines für die Batterie 1 geeigneten Druckkissens 5 detaillierter gezeigtes Federelement 8 als Stromübertragungsteil vorgesehen. Dieses umfasst ein Blech 9a mit einer Mehrzahl einzelner Federzungen 9, welche die Kontaktplatten 7 kontaktieren und mit dieser jeweils einen variablen spitzen Winkel α einschließen. Die elektrische Verbindung zwischen den Federzungen 9 und den Kontaktplatten 7 ist an im Querschnitt nahezu punktförmigen Kontaktstellen 10 gebildet. Der gleichmäßig in den flächigen Elektrolyt-Elektrodeneinheiten 3 entstehende Strom wird somit in den Kontaktstellen 10 gebündelt. Der Stromfluss von den Elektrolyt-Elektrodeneinheiten 3 durch die Kühlkarten 4 zu den Kontaktstellen 10 ist durch gestrichelte Strompfade 11 angedeutet. Zwischen jeweils einer Elektrode 12 zweier gegenüberliegender Elektrolyt-Elektrodeneinheiten 3 entsteht insgesamt ein Spannungsverlust Uᵥ, welcher hauptsächlich durch schlecht leitende Materialien, wie Kohlepapier, und die Werkstoffe der Kühlkarte 4 wie Graphit, Graphit-Kunststoff-Compounds, Edelstahl und andere metallische Werkstoffe verursacht ist. Die durch den Spannungsverlust Uᵥ entstehende Verlustwärme mindert sowohl den Wirkungsgrad als auch die maximal erreichbare Leistung der Brennstoffzelle 1. Die gut leitenden Federzungen 9 tragen nur zu einem geringen Teil zum Spannungsverlust Uᵥ bei. Der Spannungsverlust Uᵥ wird weiterhin dadurch minimiert, dass aufgrund der durch die Federzungen 9 geführten Strompfade 11 keine oder zumindest keine ausschließliche Stromleitung über den Rand der Druckkissen 5 erforderlich ist, so dass der Strom auf relativ kurzen Wegen zwischen den einzelnen Elektrolyt-Elektrodeneinheiten 3 fließt. Da das Federelement 8 mit den Federzungen 9 innerhalb des nicht den korrosiv wirkenden Betriebsmedien der Brennstoffzelle 1 ausgesetzten Druckraums 6 angeordnet ist, ist der elektrische Widerstand der Bauteile zwischen den einzelnen Elektrolyt-Elektrodeneinheiten 3 zeit- unabhängig.

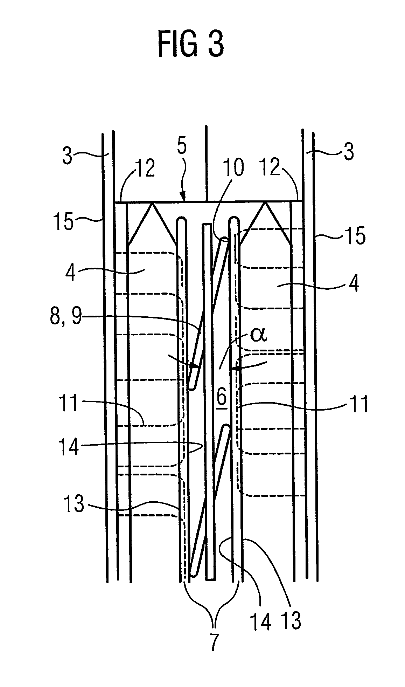

Die Kontaktplatte 7 kann vollständig aus einem Material mit hoher elektrische Leitfähigkeit wie z.B. Gold bestehen. Eine kostengünstigere Lösung ist gemäß FIG 3 dadurch möglich, dass die Kontaktplatte 7 nur teilweise aus dem Material mit hoher elektrische Leitfähigkeit besteht. Hierbei weist jede Kontaktplatte 7 eine Grundschicht 13 sowie eine auf dieser aufgebrachte Leitschicht 14 mit höherer spezifischer Leitfähigkeit und auch höherer absoluter Leitfähigkeit auf. Die Leitschicht 14 kann dabei in Form eines galvanischen Überzugs, einer Folie oder eines flexiblen, an der Kühlkarte 4 anliegenden Bleches ausgebildet sein und befindet sich ausschließlich auf der der Kühlkarte 4 abgewandten Seite der Kontaktplatte 7, sofern diese fest mit der Kühlkarte 4 verbunden ist. Andernfalls weist die Kontaktplatte 7 beidseitig Leitschichten 14 auf. Die Form der Leitschicht 14 folgt bei jedem Betriebszustand der Form der Kühlkarte 4, so dass ein flächiger Stromübergang von der Kühlkarte 4 zur Leitschicht 14 gegeben ist. Der elektrische Strom fließt von einer Membran 15 der Elektrolyt-Elektrodeneinheit 3 auf sehr kurzem Weg hauptsächlich senkrecht zur Erstreckung der Elektrolyt-Elektrodeneinheit 3 durch die Elektrode 12 und die Kühlkarte 4 zur Leitschicht 14 und wird erst dort, in gut leitendem Material, parallel zur Elektrolyt-Elektrodeneinheit 3 verteilt, so dass sich insgesamt ein elektrischer Widerstand ergibt, welcher geringer ist als im Ausführungsbeispiel nach FIG 2. Die Leitschicht 14 ist auch im Fall einer strukturierten Oberfläche der Kühlkarte 4 deren Oberflächenverlauf angepasst, um die Strompfade 11 in relativ schlecht leitenden Bauteilen kurz zu halten. Im Fall eines an eine Polplatte 2 grenzenden Druckkissens 5 ist die Leitschicht 14 ebenfalls auf der an den Druckraum 6 grenzenden Seite der Kontaktplatte 7 angeordnet.

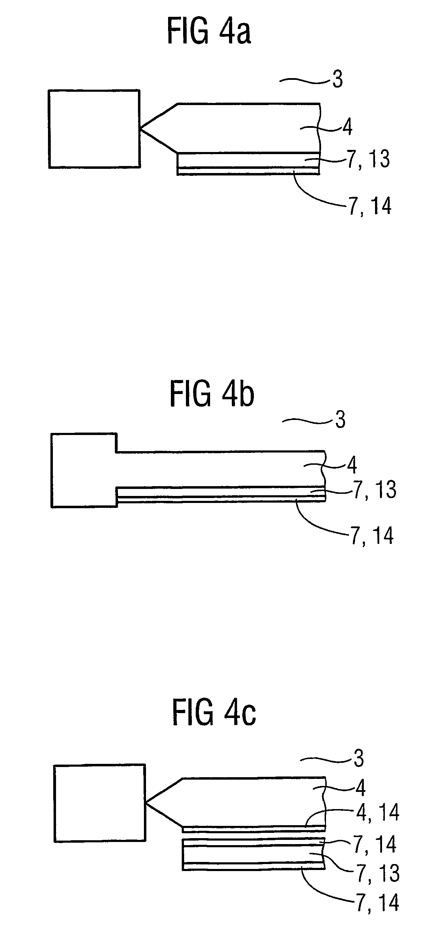

Drei Ausführungsbeispiele von Kühlkarten 4 und mit diesen zusammenwirkenden Kontaktplatten 7, welche jeweils für eine Anordnung nach FIG 3 geeignet sind, sind schematisch in den FIG 4a bis 4c dargestellt. Hierbei ist in den in den FIG 4a und 4b dargestellten Beispielen die Kontaktplatte 7 jeweils fest mit der Kühlkarte 4 verbunden, während im Ausführungsbeispiel nach FIG 4c die Kontaktplatte 7 als separates Bauteil vorgesehen ist.

Die in FIG 4a dargestellte Kühlkarte 4 weist einen Grundwerkstoff in Form eines Bleches auf, auf welches die aus Kupfer gebildete Grundschicht 13 der Kontaktplatte 7 galvanisch aufgebracht ist. Hierauf ist die Leitschicht 14 aus Gold entweder ebenfalls galvanisch oder z.B. durch Sputtern, Kleben, Pressschweißen, Reibschweißen aufgebracht.

Im Ausführungsbeispiel nach FIG 4b weist die Kühlkarte 4 als Grundwerkstoff ein Kohle-Compound auf. Hiermit ist die aus Kupfer gebildete Grundschicht 13 der Kontaktplatte 7 fest verbunden, beispielsweise verpresst oder verklebt. Die Leitschicht 14 ist, ähnlich wie beim Ausführungsbeispiel nach FIG 4a, als Beschichtung, insbesondere Goldbeschichtung, galvanisch oder z.B. durch Sputtern, Kleben, Pressschweißen oder Reibschweißen auf der Grundschicht 13 aufgebracht.

Das in FIG 4c dargestellte Ausführungsbeispiel umfasst eine Kühlkarte 4 aus Blech als Grundwerkstoff, auf welches, abweichend vom Ausführungsbeispiel nach FIG 4a, unmittelbar eine Leitschicht 14 in Form einer Beschichtung, insbesondere aus Gold, galvanisch oder z.B. durch Sputtern, Kleben, Pressschweißen, Reibschweißen, aufgebracht. Als nicht mit der Kühlkarte 4 verbundenes Bauteil weist die Kontaktplatte 7 beidseitig auf die Grundschicht 13 aus Kupfer aufgetragen ebenfalls Leitschichten 14, vorzugsweise aus Gold, auf. In nicht dargestellter Weise sind in allen Ausführungsbeispielen vorzugsweise auch die Federzungen 9 mit einer Goldbeschichtung überzogen, so dass sowohl zwischen der Kühlkarte 4 und der Kontaktplatte 7 als auch zwischen dieser und dem Federelement 8 ein geringer Übergangswiderstand gegeben ist.

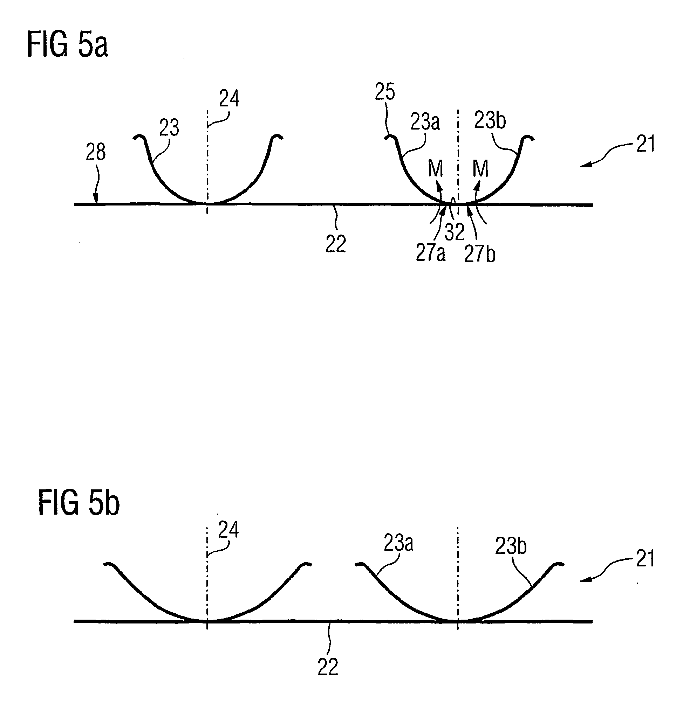

Die Figuren 5a und 5b zeigen zwei besonders vorteilhafte Ausführungsformen eines als Federelement ausgebildeten Stromübertragungsteils. Das Federelement ist als Kontaktfederblech 21 ausgebildet und weist ein Blech 22 mit aus der Blechebene 28 herausgebogenen Federzungen 23 auf, wobei jeweils zwei Federzungen 23a, 23b derart angeordnet und geformt sind, dass sich unter Krafteinwirkung auf die Zungenspitzen 25 in eine Richtung senkrecht zu der Blechebene 28 die von jeder der Federzungen in der Blechebene 28 erzeugten Biegemomente M zumindest teilweise gegenseitig aufheben.

Durch das zumindest teilweise gegenseitige Aufheben der in der Blechebene 28 erzeugten Biegemomente kann eine Verdrehung des Verbindungssteges 32 zwischen den beiden Federzungen 23a,23b weitgehend vermieden und der Verbindungssteg somit klein gehalten werden. Hierdurch können eine hohe Anzahl von Federzungen in der Blechebene angeordnet, somit eine hohe Kontaktzahl des Kontaktfederbleches und im Ergebnis kurze Wege für eine möglichst verlustfreie Stromführung durch die Batterie ermöglicht werden. Zusätzlich führen kleinere Verbindungsstege zu einer Verbesserung der Federeigenschaften des Kontaktfederblechs.

Gleichzeitig können aufgrund der reduzierten Biegemomente Biegespannungen an den Fusspunkten 27a,27b der Federzungen 23a,23b reduziert und somit plastische und irresversible Verformungen vermieden werden. Somit kann die Höhe, die die Federzungen hochgebogen werden können und somit auch der Federweg des Kontaktfederblechs 21 vergrößert werden.

Die beiden Federzungen 23a, 23b weisen hierzu eine bezüglich einer senkrecht zu der Blechebene 28 verlaufenden Achse 24 achsensymmetrische Anordnung und/oder Form auf. Bevorzugt weisen die Federzungen 23a, 23b jeweils eine Bogenform auf. In der Ausführungsform gemäß FIG 5a) weisen die Federzungen 23a,23b jeweils eine Kreisbogenform auf, d.h. dass der Bogen einem Ausschnitt aus einem Kreisbogen folgt. Gemäß einer weiteren, in FIG 5b) gezeigten bevorzugten Ausführungsform weisen die Federzungen 23a, 23b jeweils eine Parabelbogenform auf

Wenn das Kontaktfederblech 21 zwischen zwei Bauteilen zusammengepresst wird, dann gleiten die Spitzen 25 der Federzungen 23a, 23b über die Oberfläche des Bauteils, an dem sie anliegen. Um zu verhindern, dass sie dort infolge möglicherweise eigener scharfer Kanten oder an gewollten Oberflächenstrukturen des zu kontaktierenden Bauteils hängen bleiben, sind die Zungenspitzen 25 abgebogen.

Bevorzugt ist das Stromübertragungsteil von einem Rahmen eingefasst, insbesondere einem Rahmen dessen äußere Form und/oder äußeren Abmessungen identisch sind mit denjenigen eines Elektrolyt- bzw. Membran-Bauteils der Batterie. In diesem Fall kann der Rahmen genutzt werden, um eine Maßabstimmung zwischen Dichtelementen, die die Membran dichten, auf dieselben Verhältnisse zu bringen. Der Druckraum kann dann auf einfache Weise dadurch erzeugt werden, dass in dem Zellenstapel eine Elektrolyt-Elektrodeneinheit durch ein von einem Rahmen eingefasstes Stromübertragungsteil wie z.B. einem Kontaktfederblech 21 ersetzt wird. Der Rahmen kann hierzu aus einem, vorzugsweise elastischen, Material gefertigt sein. Falls die anliegenden Bauteile an den Berührungsflächen elastisches Dichtungsmaterial aufweisen, kann der Rahmen auch hart sein. Bevorzugt ist der Rahmen dann aus einem Metall, z.B. in Form einer Metallfolie, gefertigt. B

Zur Vergrößerung des Federweges kann das Federelement auch ein Blech mit zu beiden Seiten des Bleches aus der Blechebene herausgebogenen Federzungen aufweisen. Alternativ können zur Vergrößerung des Federweges auch zwei Kontaktfederbleche an ihren Blechseiten aufeinandergelegt werden.

## Patentansprüche

1. Elektrochemische Batterie (1), insbesondere eine Brennstoffzellen-Batterie oder eine Elektrolysezellen-Batterie, mit mehreren Elektrolyt-Elektrodeneinheiten (3), einer Anzahl von Kühlkarten (4) zur Kühlung jeweils zumindest einer der Elektrolyt-Elektrodeneinheiten (3) und zumindest einem unabhängig von der Medienversorgung der Elektrolyt-Elektrodeneinheiten (3) druckbeaufschlagbaren Druckraum (6) zur Erzeugung eines Anpressdruckes zwischen Bauteilen der elektrochemischen Batterie, die dem Druckraum (6) benachbart sind,
**dadurch gekennzeichnet, dass** der zumindest einen Druckraum (6) zumindest einer der Kühlkarten (4) benachbart und zumindest teilweise von dieser Kühlkarte (4) begrenzt ist, wobei innerhalb des Druckraums (6) ein an die zumindest eine Kühlkarte (4) anschließendes Stromübertragungsteil (8) angeordnet ist und wobei das Stromübertragungsteil als Federelement (8,21) ausgebildet ist.

2. Batterie nach Anspruch 1,
**dadurch gekennzeichnet, dass** der Druckraum zwischen zwei der Kühlkarten (4) angeordnet und zumindest teilweise von diesen zwei Kühlkarten begrenzt ist.

3. Batterie nach Anspruch 1,
**dadurch gekennzeichnet, dass** der Druckraum zwischen einer der Kühlkarten (4) und einer Polplatte (2) angeordnet und zumindest teilweise von der Kühlkarte und der Polplatte begrenzt ist.

4. Batterie nach Anspruch 1,
**dadurch gekennzeichnet, dass** das Federelement (8,21) zumindest ein Blech (9a,22) mit aus der Blechebene herausgebogenen Federzungen (9, 23) aufweist.

5. Batterie nach Anspruch 4,
**dadurch gekennzeichnet, dass** die Federzungen (9) mit der Kühlkarte (4) einen spitzen Winkel (α) einschließen.

6. Batterie nach Anspruch 4,
**dadurch gekennzeichnet, dass** zumindest zwei der Federzungen (23a,23b) derart angeordnet und/oder geformt sind, dass sich unter Krafteinwirkung auf die Zungenspitzen (25) in einer Richtung senkrecht zu der Blechebene (28) die von jeder der Federzungen (23a,23b) in der Blechebene (28) erzeugten Biegemomente (M) zumindest teilweise gegenseitig aufheben.

7. Batterie nach Anspruch 6,
**dadurch gekennzeichnet, dass** die beiden Federzungen (23a, 23b) eine bezüglich einer senkrecht zu der Blechebene (28) verlaufenden Achse (24) achsensymmetrische Anordnung und/oder Form aufweisen.

8. Batterie nach Anspruch 7,
**dadurch gekennzeichnet, dass** die beiden Federzungen (23a, 23b) jeweils eine Bogenform , insbesondere eine Kreisbogen- oder eine Parabelbogenform, aufweisen.

9. Batterie nach einem der Ansprüche 6 bis 8,
**dadurch gekennzeichnet, dass** die Zungespitzen (25) abgerundet sind.

10. Batterie nach Anspruch 1,
**dadurch gekennzeichnet, dass** das Stromübertragungsteil (9, 21) von einem Rahmen eingefasst ist.

11. Batterie nach Anspruch 10,
**dadurch gekennzeichnet,**
**dass** der Rahmen aus einem, vorzugsweise elastischen, Dichtmaterial gefertigt ist.

12. Batterie nach Anspruch 10,
**dadurch gekennzeichnet,**
**dass** der Rahmen aus einem Metall gefertigt ist.

13. Batterie nach einem der Ansprüche 10 bis 12,
**dadurch gekennzeichnet,**
**dass** die äußere Form und/oder die äußeren Abmessungen des Rahmens identisch sind mit denjenigen eines Elektrolyten der Elektrolyt-Elektrodeneinheiten (3)

14. Batterie nach einem der vorhergehenden Ansprüche,
**dadurch gekennzeichnet, dass** die zumindest eine Kühlkarte (4) an ihrer dem Druckraum (6) zugewandten Seite eine Kontaktplatte (7) aufweist.

15. Batterie nach Anspruch 14,
**dadurch gekennzeichnet, dass** die Kontaktplatte (7) eine auf einer Grundschicht (13) aufgebrachte Leitschicht (14) aufweist, deren spezifische elektrische Leitfähigkeit die spezifische elektrische Leitfähigkeit der Grundschicht (13) übersteigt.

16. Batterie nach Anspruch 15,
**dadurch gekennzeichnet, dass** die Leitschicht (14) eine geringere Dicke als die Grundschicht (13) aufweist.

17. Batterie nach einem der Ansprüche 14 bis 16,
**dadurch gekennzeichnet, dass** die elektrische Leitfähigkeit der Kontaktplatte (7) die elektrische Leitfähigkeit der Kühlkarte (4) übersteigt.

18. Batterie nach Anspruch 15,
**dadurch gekennzeichnet, dass** die Leitschicht (14) auf der dem Druckraum (6) zugewandten Seite der Kontaktplatte (7) angeordnet ist.

19. Batterie nach Anspruch 18,
**dadurch gekennzeichnet, dass** eine weitere Leitschicht (14) auf der dem Druckraum (6) abgewandten Seite der Kontaktplatte (7) angeordnet ist.

20. Batterie nach einem der Ansprüche 15 bis 19,
**dadurch gekennzeichnet, dass** die Leitschicht (14) als galvanische Beschichtung oder durch Sputtern, Kleben, Pressschweißen oder Reibschweißen auf der Grundschicht (13) aufgebracht ist.

21. Batterie nach einem der Ansprüche 15 bis 20,
**dadurch gekennzeichnet, dass** die Leitschicht (14) als Folie auf der Grundschicht (13) aufgebracht ist.

22. Batterie nach einem der vorhergehenden Ansprüche,
**dadurch gekennzeichnet, dass** die Anzahl der Elektrolyt-Elektrodeneinheiten (3) mindestens doppelt so groß wie die Anzahl der Druckräume (6) ist.

## Claims

1. Electrochemical battery (1), especially a fuel cell battery or an electrolysis cell battery, with a number of electrolytic electrode units (3), a number of cooling cards (4) for cooling at least one of the electrolytic electrode units (3) in each case and at least one pressure chamber (6) to which pressure can be applied independently of the medium supplied to the electrolytic electrode units (3) for creating a contact pressure between components of the electrochemical battery which are adjacent to the pressure chamber (6),
**characterised in that** the at least one pressure chamber (6) adjoins at least one of the cooling cards (4) and is delimited at least partly by this cooling card (4), with, within the pressure chamber (6), a current transfer part (8) being arranged adjoining at least one cooling card (4) and with the current transfer part being embodied as a spring element (8, 21).

2. Battery in accordance with claim 1,
**characterised in that** the pressure chamber is arranged between two of the cooling cards (4) and is at least partly delimited by these two cooling cards.

3. Battery in accordance with claim 1,
**characterised in that** the pressure chamber is arranged between one of the cooling cards (4) and a pole plate (2) and is delimited at least partly by the cooling card and the pole plate.

4. Battery in accordance with claim 1,
**characterised in that**, the spring element (8, 21) features at least one sheet (9a, 22) with spring tongues (9, 23) bent outwards from the sheet plane.

5. Battery in accordance with claim 4,
**characterised in that** the spring tongues (9) make an acute angle (c) with the cooling card (4).

6. Battery in accordance with claim 4,
**characterised in that** at least two of the spring tongues (23a, 23b) are arranged and/or formed such that when a force is applied to the tongue tips (25) in a direction at right angles to the plane of the sheet (28) the bending moments (M) created by each of the spring tongues (23a,23b) in the plane of the sheet (28) at least partly mutually cancel each other out.

7. Battery in accordance with claim 6,
**characterised in that** the two spring tongues (23a, 23b) exhibit a symmetrical arrangement and/or form around an axis in relation to an axis (24) running at right angles to the plane of the sheet (28).

8. Battery in accordance with claim 7,
**characterised in that** the two spring tongues (23a, 23b) are each in the form of an arc, especially an arc of a circle or a parabola.

9. Battery in accordance with one of the claims 6 to 8,
**characterised in that** the tips of the tongue (25) are rounded off.

10. Battery in accordance with claim 1,
**characterised in that** the current transfer part (9, 21) is enclosed by a frame.

11. Battery in accordance with claim 10,
**characterised in that**
the frame is made of a preferably elastic seal material.

12. Battery in accordance with claim 10,
**characterised in that**
the frame is made of metal.

13. Battery in accordance with one of the claims 10 to 12,
**characterised in that**
the external form and/or the external dimensions of the frame are identical to those of an electrolyte of the electrolytic electrode units (3)

14. Battery in accordance with one of the previous claims,
**characterised in that** the at least one cooling card (4) features a contact plate (7) on its side facing the pressure chamber (6).

15. Battery in accordance with claim 14,
**characterised in that** the contact plate (7) features a conductive layer (14) applied to a base layer (13), of which the specific electrical conductivity exceeds the specific electrical conductivity of the base layer (13).

16. Battery in accordance with claim 15,
**characterised in that** the conductive layer (14) is thinner than the base layer (13).

17. Battery in accordance with one of the claims 14 to 16,
**characterised in that** the electrical conductivity of the contact plate (7) exceeds the electrical conductivity of the cooling card (4).

18. Battery in accordance with claim 15,
**characterised in that** the conductive layer (14) is arranged on the side of the contact plate (7) facing the pressure chamber (6).

19. Battery in accordance with claim 18,
**characterised in that** a further conductive layer (14) is arranged on the side of the contact plate (7) facing away from the pressure chamber (6).

20. Battery in accordance with one of the claims 15 to 19,
**characterised in that** the conductive layer (14) is applied to the base layer (13) as an electrical coating or through sputtering, gluing, pressure welding or friction welding.

21. Battery in accordance with one of the claims 15 to 20,
**characterised in that** the conductive layer (14) is applied as a foil to the base layer (13).

22. Battery in accordance with one of the previous claims,
**characterised in that** the number of the electrolytic electrode units (3) is at least twice as large as the number of pressure chambers (6).

## Revendications

1. Batterie ( 1 ) électrochimique, notamment batterie de piles à combustible ou batterie de piles d'électrolyse, comprenant plusieurs unités ( 3 ) électrolyte-électrodes, un certain nombre de cartes ( 4 ) de refroidissement, pour le refroidissement respectivement d'au moins l'une des unités ( 3 ) électrolyte-électrodes, et au moins une chambre ( 6 ) de pression pouvant être soumise à une pression indépendamment de l'alimentation en fluide des unités ( 3 ) électrolyte-électrodes pour la production d'une pression d'application entre des éléments de la batterie électrochimique, qui sont voisins de la chambre ( 6 ) de pression, **caractérisée en ce que** la au moins une chambre ( 6 ) de pression est voisine d'au moins l'une des cartes ( 4 ) de refroidissement et est délimitée au moins en partie par cette carte ( 4 ) de refroidissement, une partie ( 8 ) de transmission du courant électrique, se raccordant à la au moins une carte ( 4 ) de refroidissement, étant disposée à l'intérieur de la chambre ( 6 ) de pression et la partie de transmission du courant électrique étant constituée sous la forme d'un élément ( 8, 21 ) à ressort.

2. Batterie suivant la revendication 1,
**caractérisée en ce que** la chambre de pression est disposée entre deux des cartes ( 4 ) de refroidissement et est délimitée au moins en partie par ces deux cartes de refroidissement.

3. Batterie suivant la revendication 1,
**caractérisée en ce que** la chambre de pression est disposée entre l'une des cartes ( 4 ) de refroidissement et une plaque ( 2 ) polaire et est délimitée au moins en partie par la carte de refroidissement et par la plaque polaire.

4. Batterie suivant la revendication 1,
**caractérisée en ce que** l'aimant ( 8, 21 ) à ressort comporte au moins une tôle ( 9a, 22 ) ayant des languettes ( 9, 23 ) élastiques sorties hors du plan de la tôle en les courbant.

5. Batterie suivant la revendication 4,
**caractérisée en ce que** les languettes ( 9 ) élastiques font un angle ( α ) aigu avec la carte ( 4 ) de refroidissement.

6. Batterie suivant la revendication 4,
**caractérisée en ce qu'**au moins deux des languettes ( 23a, 23b ) élastiques sont disposées et/ou conformées, de manière à ce que les couples ( M ) de flexion, produits sous l'effet de la force s'appliquant aux pointes ( 25 ) des languettes dans une direction perpendiculaire au plan ( 28 ) de la tôle par chacune des languettes ( 23a, 23b ) élastiques dans le plan ( 28 ) de la tôle, soient opposés au moins en partie.

7. Batterie suivant la revendication 6,
**caractérisée en ce que** les deux languettes ( 23a, 23b ) élastiques ont un agencement et/ou une forme à symétrie axiale par rapport à un axe ( 24 ) s'étendant perpendiculairement au plan ( 28 ) de la tôle.

8. Batterie suivant la revendication 7,
**caractérisée en ce que** les deux languettes ( 23a, 23b ) élastiques ont respectivement une forme en arceau, notamment une forme en arceau circulaire ou une forme en arceau de parabole.

9. Batterie suivant l'une des revendications 6 à 8,
**caractérisée en ce que** les pointes ( 25 ) des languettes sont arrondies.

10. Batterie suivant la revendication 1,
**caractérisée en ce que** la partie ( 9, 21 ) de transmission du courant électrique est enchâssée par un cadre.

11. Batterie suivant la revendication 10,
**caractérisée en ce que** le cadre est en un matériau d'étanchéité, de préférence élastique.

12. Batterie suivant la revendication 10,
**caractérisée en ce que** le cadre est en un métal.

13. suivant l'une des revendications 10 à 12,
**caractérisée en ce que** la paroi extérieure et/ou les dimensions extérieures du cadre sont identiques à celles d'un électrolyte des unités ( 3 ) électrolyte-électrodes.

14. Batterie suivant l'une des revendications précédentes,
**caractérisée en ce que** la au moins une carte ( 4 ) de refroidissement a une plaque ( 7 ) de contact sur son côté tourné vers la chambre ( 6 ) de pression.

15. Batterie suivant la revendication 14,
**caractérisée en ce que** la plaque ( 7 ) de contact a une couche ( 14 ) conductrice, qui est déposée sur une couche ( 13 ) de base et dont la conductivité électrique spécifique dépasse la conductivité électrique spécifique de la couche ( 13 ) de base.

16. Batterie suivant la revendication 15,
**caractérisée en ce que** la couche ( 14 ) conductrice a une épaisseur plus petite que la couche ( 13 ) de base.

17. Batterie suivant l'une des revendications 14 à 16,
**caractérisée en ce que** la conductivité électrique de la plaque ( 7 ) de contact dépasse la conductivité électrique de la carte ( 4 ) de refroidissement.

18. Batterie suivant la revendication 15,
**caractérisée en ce que** la couche ( 14 ) conductrice est disposée sur la face de la plaque ( 7 ) de contact, qui est tournée vers la chambre ( 6 ) de pression.

19. Batterie suivant la revendication 18,
**caractérisée en ce qu'**une autre couche ( 14 ) conductrice est disposée sur la face de la plaque ( 7 ) de contact éloignée de la chambre ( 6 ) de pression.

20. Batterie suivant l'une des revendications 15 à 19,
**caractérisée en ce que** la couche ( 14 ) conductrice est déposée sous la forme d'un revêtement galvanique ou par pulvérisation cathodique, collage, soudage avec pression ou soudage par friction sur la couche ( 13 ) de base.

21. Batterie suivant l'une des revendications 15 à 20,
**caractérisée en ce que** la couche ( 14 ) conductrice est déposée sous la forme d'une feuille sur la couche ( 13 ) de base.

22. Batterie suivant l'une des revendications précédentes,
**caractérisée en ce que** le nombre des unités ( 3 ) électrolyte-électrodes est au moins deux fois plus grand que le nombre des chambres ( 6 ) de pression.
